# FASCICULE DE BREVET EUROPEEN

(11) **EP 1 292 446 B1**
(45) Date de publication et mention de la délivrance du brevet: **12.06.2013**
(21) Numéro de dépôt: 01917153.7
(22) Date de dépôt: 15.03.2001
(51) Int. Cl.: B32B 27/08, C08L 77/00

(54) **ARTICLES COMPRENANT UN ELEMENT A BASE DE POLYOLEFINE ASSEMBLE A UN ELEMENT A BASE DE POLYAMIDE, ET LEUR PROCEDE D'OBTENTION**
ARTIKEL MIT POLYOLEFIN-ENTHALTENDEM ELEMENT VERBUNDEN MIT EINEM POLYAMID-ENTHALTENDEM ELEMENT UND VERFAHREN ZU IHRER HERSTELLUNG
ARTICLES COMPRISING A POLYOLEFIN-BASED ELEMENT ASSEMBLED TO A POLYAMIDE BASED ELEMENT, AND METHOD FOR OBTAINING SAME

(30) Priorité: 17.03.2000 FR 0003445
(43) Date de publication de la demande: 19.03.2003
(73) Titulaire: RHODIA ENGINEERING PLASTICS S.A., 69192 Saint-Fons (FR)
(72) Inventeur: PEDUTO, Nicolangelo, I-20031 Cesano Maderno (IT)
(74) Mandataire: Roger, Walter
(86) Numéro de dépôt international: PCT/FR2001/000779
(87) Numéro de publication internationale: WO 2001/068365

(56) Documents cités:
- EP-A- 0 595 706
- EP-A- 0 786 319
- EP-A- 0 997 268
- US-A- 5 443 867
- B. FISA ET AL.: "EFFECT OF AN IONOMER COMTATIBILIZER ON THE STRUCTURE AND MECHANICAL PROPERTIES OF INJECTION MOLDED PA6/HDPE BLENDS" IN SEARCH OF EXCELLENCE / ANTEC CONFERENCE, vol. 49, 1991, pages 1135-1139, XP000972372

## Description

La présente invention concerne des articles manufacturés comprenant au moins deux éléments en matière thermoplastique assemblés, un premier élément à base d'une polyoléfine et un deuxième élément à base d'un polyamide. Ces articles sont particulièrement utiles dans les secteurs de l'automobile et du matériel de sport.

Le choix d'un matériau thermoplastique pour la réalisation d'articles manufacturés mis en forme à partir de celui-ci est généralement guidé par des critères de coûts et de propriétés. Ainsi selon l'utilisation qui sera faite d'un objet et l'environnement dans lequel il sera utilisé on exigera des propriétés différentes, telles que la résilience, la rigidité, la flexibilité, la stabilité dimensionnelle, la température de déformation sous charge, la tenue à la chaleur, l'imperméabilité à certaines substances chimiques, la résistance au contact de certaines substances, etc...

Parmi les matériaux utilisés les polyoléfines thermoplastiques présentent généralement un faible coût. On cite comme exemple le polyéthylène, le polypropylène.

Les polyamides présentent un niveau de performance plus élevé. Ils présentent par exemple un meilleur comportement mécanique à des températures élevées.

Afin de trouver les meilleurs compromis coûts/propriétés, il est connu de réaliser des articles par assemblage d'éléments mis en forme à partir de matériaux différents. De tels assemblages permettent d'utiliser, pour chaque partie fonctionnelle de l'article, le natériau le plus adapté.

L'assemblage des différents éléments doit aussi être pris en compte pour la conception d'un article : il peut engendrer des surcoûts et avoir un impact sur les caractéristiques de l'article (altération des propriétés mécaniques, création d'une zone de fragilité, mauvaise étanchéité ...). Le mode d'assemblage peut donc être une caractéristique essentielle pour la réalisation d'articles manufacturés.

Pour réaliser des assemblages d'éléments en polyoléfines et en polyamide il est connu d'utiliser des moyens mécaniques. Par exemple il est connu d'assembler des parties tubulaires respectivement en polyamide et en polyéthylène par l'intermédiaire d'un manchon sur lequel sont vissés ou encastrés les éléments. L'assemblage mécanique peut provoquer des défauts d'étanchéité et peut se révéler mal adapté dans certains cas.

Il est aussi connu de coller les éléments. Ce mode d'assemblage nécessite l'application d'une couche de colle, parfois dans des zones difficiles à atteindre, ce qui peut représenter dans certains cas un inconvénient et un surcoût.

EP-A-786319 et EP-A-595706 décrivent l'assemblage d'éléments en polyoléfine et en polyamide par co-extrusion ou moulage par injection

Le polyamide et les polyoléfines sont des matériaux chimiquement incompatibles, c'est-à-dire qu'ils ne se mélangent pas. Cette incompatibilité empêche de les souder l'un à l'autre.

La présente invention a pour objet des articles selon la revendication 1 comportant des éléments respectivement à base de polyamide et à base de polyoléfine, présentant une autre structure, notamment un autre assemblage. Les articles selon l'invention présentent d'excellentes propriétés mécaniques et une étanchéité excellente au niveau de l'assemblage.

A cet effet, l'invention propose un article comprenant au moins deux éléments en matériaux thermoplastiques assemblés, un premier élément étant mis en forme à partir d'un matériau à base d'une polyoléfine et un deuxième élément étant mis en forme à partir d'un matériau comprenant un polyamide, caractérisé en ce que le matériau du deuxième élément est une composition comprenant au moins un polyamide et un compatibilisant des polyamides et des polyoléfines, et en ce que l'assemblage est réalisé par soudure des deux éléments sur une partie des surfaces de ceux ci.

Par assemblage d'éléments, on entend toute structure dans laquelle au moins deux éléments sont mis en contact sur au moins une partie de leurs surfaces respectives, et solidarisés sur une partie au niveau de la surface de contact. Selon l'invention, la solidarisation est obtenue par soudure.

Les deux éléments peuvent être mis en contact sur des portions planes de leurs surfaces, ou sur des portions courbes. De préférence, les surfaces mises en contact coopèrent pour former une ligne de soudure continue, ou une surface de soudure continue.

Selon un mode de réalisation particulier de l'invention, les parties des éléments mises en contact sont de formes conjuguées. Elles peuvent par exemple être emboîtées. A titre d'exemple, une partie tubulaire d'un élément peut être introduite dans une partie tubulaire de l'autre élément, de diamètre légèrement supérieur.

La polyoléfine utilisée pour la réalisation du premier élément est de préférence choisie parmi les polyéthylènes, les polypropylènes et les copolymères à base d'éthylène et d'α-oléfines. On cite à titre d'exemple de polyéthylènes, le polyéthylène, les polyéthylènes basses densités, les polyéthylènes hautes densités.

Le compatibilisant utilisé pour la mise en oeuvre de l'invention est de préférence choisi dans la famille des ionomères. Les ionomères sont des copolymères ioniques présentant des unités récurrentes d'au moins une a-oléfine et au moins un acide carboxylique α, β insaturé, dont au moins une partie des motifs acides sont ionisés avec un ion métallique. L'α-oléfine comporte de préférence 2 à 6 atomes de carbone, et l'acide comporte de préférence 3 à 6 atomes de carbone. L'α-oléfine est de préférence l'éthylène et l'acide est de préférence l'acide acrylique ou méthacrylique. D'autres monomères peuvent être utilisés en complément comme les acrylates ou les méthacrylates. L'ion métallique peut être monovalent, divalent ou trivalent, comme par exemple les ions du sodium, du zinc, de l'aluminium, du potassium. A titre d'exemple d'un ionomère pouvant être utilisé, on cite le copolymère éthylène/isobutylacrylate/acide méthacrylique (80/10/10) neutralisé par 70 % de zinc.

Des ionomères pouvant être utilisés pour la mise en oeuvre de l'invention sont commercialisés sous la dénomination Surlyn^{®} par la société Du Pont de Nemours.

La composition à partir de laquelle le deuxième élément est mis en forme contient de préférence, en plus du polyamide et du compatibilisant, un composé polyoléfinique. Par composé polyoléfinique on entend un composé de type polymérique qui comporte des unités récurrentes oléfiniques. Il peut par exemple s'agir d'un thermoplastique ou d'un élastomère.

Selon un premier mode de réalisation de l'invention, le composé polyoléfinique est un thermoplastique, de préférence de même nature que celui à partir duquel, ou à la base duquel, le premier élément est mis en forme. La polyoléfine est de préférence choisie parmi les polyéthylènes et les polypropylènes. Elle peut de plus présenter une fonctionnalisation, par exemple par de l'anhydride maléique. Il peut être aussi avantageux d'utiliser un mélange de polyéthylène fonctionnalisé et de polyéthylène non fonctionnalisé.

Selon un autre mode de réalisation de l'invention le composé polyoléfinique présente un caractère élastomérique. On cite à titre d'exemple les caoutchoucs éthylène propylène (EPR) et les caoutchoucs éthylène-propylène-diène monomères (EPDM). Ces composés peuvent éventuellement présenter une fonctionnalisation par de l'anhydride maléique.

Le polyamide compris dans la composition formant le matériau du deuxième élément est de préférence choisi parmi les polyamides semi-cristallins par exemple, les polymères obtenus par action de polycondensation de diacides carboxyliques aliphatiques saturés ayant de 6 à 12 atomes de carbone tels que, par exemple l'acide adipique, acide azélaïque, acide sébacique, acide dodécanoïque ou un mélange de ceux-ci avec des diamines biprimaires de préférence aliphatiques saturées linéaires ou ramifiées ayant de 4 à 12 atomes de carbone telles que, par exemple l'hexaméthylène diamine, la triméthylhexaméthylène diamine, la tétraméthylène diamine, la m-xylène diamine ou un mélange de celles-ci ; les polyamides obtenus soit par homopolycondensation directe d'acide ω-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de ces polyamides ou leurs copolymères.

A titre d'illustration des polyamides obtenus par polycondensation de diacides et de diamines, on citera par exemple :
- le Nylon 4,6 (polymère de tétraméthylènediamine et d'acide adipique),
- le Nylon 6,6 (polymère d'hexaméthylènediamine et d'acide adipique),
- le Nylon 6,9 (polymère d'hexaméthylènediamine et d'acide azélaïque),
- le Nylon 6,10 (polymère d'hexaméthylènediamine et d'acide sébacique),
- le Nylon 6,12 (polymère d'hexaméthylènediamine et d'acide dodécanedioïque).

A titre d'illustration des polyamides obtenus par homopolycondensation qui peuvent convenir, on citera :
- le Nylon 4 (polymère d'acide amino-4 butanoïque ou de γ-butyrolactame),
- le Nylon 5 (polymère d'acide amino-5 pentanoïque ou de δ-amylolactame),
- le Nylon 6 (polymère d'ε-caprolactame),
- le Nylon 7 (polymère d'acide amino-7 heptanoïque),
- le Nylon 8 (polymère de capryllactame),
- le Nylon 9 (polymère d'acide amino-9 nonanoïque),
- le Nylon 10 (polymère d'acide amino-10 décanoïque),
- le Nylon 11 (polymère d'acide amino-11 undécanoïque),
- le Nylon 12 (polymère d'acide amino-12 dodécanoïque ou de laurylactame).

A titre d'illustration des copolyamides, on citera par exemple :
- le Nylon 6,6/6,10 (copolymère d'hexaméthylènediamine, d'acide adipique et d'acide sébacique),
- le Nylon 6,6/6 (copolymère d'hexaméthylènediamine, d'acide adipique et de caprolactame).
- le Nylon 6/12
- le Nylon 6/11
- le Nylon 6/6,36

Les polyamides préférés de l'invention sont les polyamides 6.6, les polyamides 6, les copolyamides 66/6 et 6/6,36.

Les matériaux thermoplastiques à partir desquels les éléments sont mis en forme peuvent avantageusement comporter des charges, par exemple des charges de renfort, telle que des fibres de verre, des fibres en matières synthétiques thermodurcissable ou présentant un point de fusion supérieur à 325°C, des fibres de carbone, et/ou des poudres minérales telle que le talc, mica, kaolin, carbonate de calcium. Ces charges sont couramment utilisées dans les domaines de la plasturgie.

Elles peuvent également comprendre des additifs usuellement ajoutés dans les compositions thermoplastiques tels que stabilisants, plastifiants, ignifugeants, antioxydants, lubrifiants ou autres additifs conventionnels.

On peut utiliser tous les procédés connus pour la réalisation d'éléments mis en forme en matière thermoplastique comportant plusieurs composés. On cite par exemple :
- mise en forme à partir de granulés d'une composition contenant tous les éléments,
- mise en forme à partir de mélanges de granulés de compositions différentes et éventuellement d'additifs introduits sous forme de poudre ou mélange maître, par exemple granulés de polyéthylène, de polyamide et de ionomère.
- mise en forme à partir de granulés dont au moins une partie est enrobée par un additif ou autre composé.

Les compositions comportant un polyamide, un compatibilisant et un composé polyoléfinique présentent généralement une phase continue et une phase dispersée à l'intérieur de la phase continue. La nature des composants et leur concentration sont avantageusement choisies de manière à ce que la phase continue soit constituée de polyamide et la phase dispersée soit constituée du composé polyoléfinique. Cette morphologie peut permettre de conférer au matériau des propriétés caractéristiques du polyamide. Elle peut permettre par exemple de maintenir la perméabilité aux carburants à un niveau suffisamment bas. La composition dont est constitué le deuxième élément présente de préférence une bonne imperméabilité aux carburants contenant des alcools.

Les deux éléments peuvent être mis en forme selon les procédés classiques, parmi lesquels on cite l'injection, l'extrusion soufflage, l'injection-gaz, l'injection-eau. Ils peuvent éventuellement présenter une cavité ou une partie creuse.

Selon un mode de réalisation particulier les deux éléments sont creux ou à section creuse et sont assemblés de manière à ce que les parties creuses de chacun des éléments communiquent. L'assemblage est avantageusement réalisé par conjugaison de forme.

Le deuxième élément peut par exemple être un conduit tubulaire.

Pour réaliser un deuxième élément de forme tubulaire, on peut préférer la technique de l'extrusion-soufflage. A cet effet, la composition à base de polyamide a de préférence un indice de fluidité compris entre 0,5 g / 10 min et 8 g / 10 min, déterminé par application d'une charge de 5 kg à 275°C. Elle peut de plus avantageusement présenter un module inférieur à 1500 Mpa, de préférence inférieur à 1000 Mpa, ce qui confère à l'élément un degré de flexibilité suffisant qui peut permettre de faciliter le montage des articles et d'éviter de réaliser une mise en forme avec un profil complexe. Le deuxième élément peut de plus présenter des portions en soufflet permettant d'en améliorer encore la flexibilité. La composition peut selon une autre caractéristique intéressante présenter une résistance aux chocs IZOD entaillé, mesurée à 23°C, supérieure à 800 J/m.

La solidarisation définitive des pièces après assemblage est effectuée par soudure. Après mise en contact, les surfaces sont par exemple amenées à une température au moins supérieure à la température de ramollissement des matériaux constituant les éléments, de préférence voisine à la température de fusion.

Comme techniques de soudure connues et convenables pour l'invention, on peut citer à titre d'exemple :
- la soudure par ultrasons : les surfaces sont portées à la température voulue par les ultrasons,
- la soudure par vibration : les surfaces sont mises en contact et en vibration l'une par rapport à l'autre, le frottement entre les surfaces provoquant l'échauffement et le ramollissement de la matière,
- la soudure par miroir chauffant : un miroir chauffé est disposé entre les surfaces de soudure, puis retiré quand celles-ci ont atteint la température désirée. Les surfaces sont alors mises en contact sous une pression déterminée.
- la soudure par Infrarouge : technique semblable à celle du miroir chauffant, la source de chaleur étant un émetteur de rayons infrarouges.
- la soudure laser.

D'autres détails ou avantages de l'invention apparaîtront plus clairement au vu des exemples donnés ci-dessous uniquement à titre indicatif.

### Exemples

Les compositions suivantes ont été réalisées :

### Composition 1 :

Composition obtenue par extrusion d'un mélange de 20% en poids de granulés d'un ionomère commercialisé par la société Du Pont sous la dénomination SURLYN® 1652 et de 80 de composition polyamide élastomérisée suivante:
- 57,4% en poids d'un polyamide 6 commercialisé par la société Rhodia Enginneering Plastics sous la référence Technyl C 502, de viscosité relative de 5.
- 40% en poids d'un élastomère éthylène-propylène greffé anhydride maléique commercialisé par la société EXXON sous la dénomination EXXELOR VA 1801
- 2,6 de pigments et lubrifiants (noir de carbone, stéarate de Calcium)

### Composition 2 :

Composition obtenue par extrusion de :
- 57,4% en poids d'un polyamide 6 commercialisé par la société Rhodia Enginneering Plastics sous la référence Technyl C 502, de viscosité relative de 5.
- 30% d'un polyéthylène haute densité (HDPE) commercialisé par la société BASF sous la dénomination LUPONEN ELENAC
- 10% d'un ionomère commercialisé par la société Du Pont sous la dénomination SURLYN® 1652
- 2,6 de pigments et lubrifiants (noir de carbone, stéarate de Calcium)

Des plaquettes ont été mises en forme par injection à partir de la composition 1, de la composition 2, du polyamide élastomérisé décrit ci-dessus, et du polyéthylène haute densité décrit ci-dessus.

Les plaquettes ont été soudées deux à deux en les maintenant environ 10 secondes à 320 °C par la technique des miroirs chauffants. La force en Newton nécessaire à la séparation des deux plaquettes a été mesurée. Elle est reportée sur le tableau I.

**Tableau I**

| | PA 6 élastomérisé (exemple comparatif) | HDPE (élément 1) |
|---|---|---|
| Composition 1 (élément 2) | 650 | 780 |
| Composition 2 (élément 2) | 940 | 840 |
| PA 6 élastomérisé (élément 2, exemple comparatif) | 1000 | 0 |

Les compositions 1 et 2 ont une aptitude à la soudure avec le polyéthylène supérieure à celle d'un polyamide non conforme à l'invention.

La perméabilité aux fuels des compositions1 et 2, du polyamide élastomérisé, et du polyéthylène haute densité ont été mesurées.

La perméabilité des tubes fabriqués est évaluée par une méthode statique. Un échantillon de tube de longueur 300 mm est fermé à une de ses extrémités avec un bouchon de NYLON recouvert par une colle résistante au carburant. Le tube est connecté par son autre extrémité à un réservoir de carburant d'une capacité de 25 cm³, pour ainsi maintenir constante la composition du carburant dans le tube. Le tube est conditionné en température et en imprégnation de fluide pour ainsi obtenir une mesure directe de la perméabilité. Les essais sont réalisés à 40°C et la diffusion est déterminée par la perte de poids pendant une durée déterminée, par exemple après des durées de 24 heures.

Ainsi, la perméabilité correspond à la vitesse de perte de poids de l'échantillon déterminée quand la perte de poids pour des durées successives est constante.

Les mesures (g/m².jour) sont présentées dans le tableau II, pour différents carburants.

**Tableau II**

| | Fuel sans alcool | fuel contenant 6,5% d'alcool | Gasoil contenant 22% d'alcool |
|---|---|---|---|
| PA 6 élastomérisé | 0 | 11 | 26 |
| HDPE | 40 | 38 | 54 |
| Composition 1 | 0 | 0 | 0 |
| Composition 2 | 0 | 0 | 11 |

Ces résultats montrent que les compositions ont d'excellentes perméabilités aux fuels.

## Revendications

1. Article comprenant au moins deux éléments en matériaux thermoplastiques assemblés, un premier élément étant mis en forme à partir d'un matériau à base d'une polyoléfine et un deuxième élément étant mis en forme à partir d'un matériau comprenant un polyamide, **caractérisé en ce que** le matériau du deuxième élément est une composition comprenant au moins un polyamide et un compatibilisant des polyamides et des polyoléfines, **en ce que** l'assemblage est réalisé par soudure des deux éléments sur au moins une partie des surfaces de ceux ci, et **en ce que**
- les deux éléments sont mis en contact sur une partie de leur surface, ou
- les deux éléments sont mis en contact sur au moins une partie de leur surface et l'assemblage est effectué sur une partie de la surface où les deux éléments sont en contact.

2. Article selon la revendication 1, **caractérisé en ce que** le compatibilisant est un ionomère.

3. Article selon la revendication 1 ou 2, **caractérisé en ce que** la soudure est réalisée par soudure laser, soudure par vibration, soudure par ultrasons, soudure par miroirs chauffants, soudure par infrarouge.

4. Article selon l'une quelconque des revendications 1 à 3, **caractérisé en ce que** le matériau du deuxième élément est une composition comprenant un polyamide, un ionomère et un composé polyoléfinique.

5. Article selon la revendication 4, **caractérisé en ce que** le composé polyoléfinique est un élastomère ou un thermoplastique.

6. Article selon l'une des revendications 4 à 5, **caractérisé en ce que** le composé polyoléfinique est un thermoplastique de même nature que celle à partir de laquelle le premier élément est réalisé.

7. Article selon l'une des revendications précédentes, **caractérisé en ce que** le polyamide est choisi parmi le polyamide 6, le polyamide 11, le polyamide 12, le polyamide-4.6, le polyamide 6.10, le polyamide 6.6, le polyamide 6.10, le polyamide 6.36, les copolymères et mélanges à base de ces polyamides.

8. Article selon l'une des revendications précédentes, **caractérisé en ce que** la composition a un indice de fluidité à l'état fondu compris entre 0,5 g/10 min et 8 g/10 min, mesuré sous une charge de 5 kg à une température de 275°C.

9. Article selon l'une des revendications précédentes, **caractérisée en ce que** la polyoléfine est choisie parmi les polyéthylènes, les polypropylènes, les copolymères et mélanges à base de ces polymères.

10. Article selon l'une des revendications 4 à 9, **caractérisé en ce que** le composé polyoléfinique est le polyéthylène.

11. Article selon l'une des revendications 4 à 9, **caractérisé en ce que** le composé polyoléfinique est un caoutchouc éthylène-propylène fonctionnalisé par de l'anhydride maléique.

12. Article selon l'une des revendications 4 à 11, **caractérisé en ce que** la composition présente une phase continue et une phase dispersée à l'intérieur de la phase continue, la phase continue étant constituée du polyamide et la phase dispersée étant constituée du composé polyoléfinique.

13. Article selon l'une des revendications précédentes, **caractérisé en ce que** les éléments sont obtenus par mise en forme par une technique choisie parmi l'injection, l'extrusion soufflage, l'injection gaz, l'injection-eau.

14. Article selon l'une des revendications précédentes, **caractérisé en ce que** les deux éléments sont creux, assemblés par conjugaison des formes de manière à ce que les parties creuses de chacun des éléments communiquent.

15. Article selon la revendication 14, **caractérisé en ce que** le deuxième élément est un conduit tubulaire.

16. Procédé de fabrication d'articles selon l'une des revendications précédentes, par mise en forme d'éléments en matière thermoplastique puis assemblage, **caractérisé en ce que** l'assemblage est réalisé par mise en contact des éléments sur au moins une partie de leurs surfaces puis soudure des deux pièces sur au moins une partie où les deux éléments sont en contact, à une température supérieure aux températures de ramollissement des matériaux constituant les éléments.

17. Procédé selon la revendication 16, **caractérisé en ce que** la soudure est réalisé au moyen d'un laser, soudure par vibration, soudure par ultrasons, soudure par miroirs chauffants, ou soudure par infrarouge.

## Patentansprüche

1. Gegenstand mit mindestens zwei zusammengefügten Elementen aus thermoplastischen Materialien, wobei ein erstes Element aus einem Material auf der Basis eines Polyolefins geformt ist und das zweite Element aus einem Material, das ein Polyamid umfasst, geformt ist, **dadurch gekennzeichnet, dass** es sich bei dem Material des zweiten Elements um eine Zusammensetzung handelt, die mindestens ein Polyamid und einen Verträglichkeitsvermittler für Polyamide und Polyolefine umfasst, das Zusammenfügen durch Verschweißen der beiden Elemente über mindestens einen Teil ihrer Oberflächen erfolgt und
- die beiden Elemente über einen Teil ihrer Oberfläche in Kontakt gebracht werden oder
- die beiden Elemente über mindestens einen Teil ihrer Oberfläche in Kontakt gebracht werden und das Zusammenfügen über einen Teil der Oberfläche erfolgt, wo die beiden Elemente in Konkakt stehen.

2. Gegenstand nach Anspruch 1, **dadurch gekennzeichnet, dass** es sich bei dem Verträglichkeitsvermittler um ein Ionomer handelt.

3. Gegenstand nach Anspruch 1 oder 2, **dadurch gekennzeichnet, dass** das Verschweißen durch Laserschweißen, Vibrationsschweißen, Ultraschallschweißen, Heizspiegelschweißen oder Infrarotschweißen erfolgt.

4. Gegenstand nach einem der Ansprüche 1 bis 3, **dadurch gekennzeichnet, dass** es sich bei dem Material des zweiten Elements um eine Zusammensetzung handelt, die ein Polyamid, ein Ionomer und eine Polyolefinverbindung umfasst.

5. Gegenstand nach Anspruch 4, **dadurch gekennzeichnet, dass** es sich bei der Polyolefinverbindung um ein Elastomer oder einen Thermoplast handelt.

6. Gegenstand nach einem der Ansprüche 4 bis 5, **dadurch gekennzeichnet, dass** es sich bei der Polyolefinverbindung um einen Thermoplast der gleichen Art wie derjenigen, aus der das erste Element hergestellt wird, handelt.

7. Gegenstand nach einem der vorhergehenden Ansprüche, **dadurch gekennzeichnet, dass** das Polyamid aus Polyamid-6, Polyamid-11, Polyamid, 12, Polyamid-4.6, Polyamid-6.10, Polyamid-6.6, Polyamid-6.10, Polyamid-6.36, Copolymeren und Mischungen auf der Basis dieser Polyamide ausgewählt ist.

8. Gegenstand nach einem der vorhergehenden Ansprüche, **dadurch gekennzeichnet, dass** die Zusammensetzung einen Schmelzindex zwischen 0,5 g/10 min und 8 g/10 min, gemessen unter einer Last von 5 kg bei einer Temperatur von 275°C, aufweist.

9. Gegenstand nach einem der vorhergehenden Ansprüche, **dadurch gekennzeichnet, dass** das Polyolefin aus Polyethylenen, Polypropylenen, Copolymeren und Mischungen auf der Basis dieser Polymere ausgewählt ist.

10. Gegenstand nach einem der Ansprüche 4 bis 9, **dadurch gekennzeichnet, dass** es sich bei der Polyolefinverbindung um Polyethylen handelt.

11. Gegenstand nach einem der Ansprüche 4 bis 9, **dadurch gekennzeichnet, dass** es sich bei der Polyolefinverbindung um einen mit Maleinsäureanhydrid funktionalisierten Ethylen-Propylen-Kautschuk handelt.

12. Gegenstand nach einem der Ansprüche 4 bis 11, **dadurch gekennzeichnet, dass** die Zusammensetzung eine kontinuierliche Phase und eine dispergierte Phase in der kontinuierlichen Phase aufweist, wobei die kontinuierliche Phase aus Polyamid besteht und die dispergierte Phase aus der Polyolefinverbindung besteht.

13. Gegenstand nach einem der vorhergehenden Ansprüche, **dadurch gekennzeichnet, dass** die Elemente durch Formen mit Hilfe einer Technik, die unter Spritzen, Extrusionsblasen, Gasinjektion und Wasserinjektion ausgewählt ist, erhalten werden.

14. Gegenstand nach einem der vorhergehenden Ansprüche, **dadurch gekennzeichnet, dass** die beiden Elemente hohl sind und durch derartige Konjugation der Formen, dass die hohlen Teile jedes der Elemente kommunizieren, zusammengefügt sind.

15. Gegenstand nach Anspruch 14, **dadurch gekennzeichnet, dass** es sich bei dem zweiten Element um eine rohrförmige Leitung handelt.

16. Verfahren zur Herstellung von Gegenständen nach einem der vorhergehenden Ansprüche durch Formen von Elementen aus thermoplastischem Material und anschließendes Zusammenfügen, **dadurch gekennzeichnet, dass** das Zusammenfügen durch Inkontaktbringen der Elemente über mindestens einen Teil ihrer Oberflächen und anschließendes Verschweißen der beiden Teile über mindestens einen Teil, wo die beiden Elemente in Kontakt stehen, bei einer Temperatur, die über den Erweichungstemperaturen der Materialien, aus denen die Elemente bestehen, liegt, erfolgt.

17. Verfahren nach Anspruch 16, **dadurch gekennzeichnet, dass** das Verschweißen durch Laserschweißen, Vibrationsschweißen, Ultraschallschweißen, Heizspiegelschweißen oder Infrarotschweißen erfolgt.

## Claims

1. Article comprising at least two elements made of thermoplastics which are joined together, a first element being formed from a material based on a polyolefin and a second element being formed from a material comprising a polyamide, **characterized in that** the material of the second element is a composition comprising at least one polyamide and a compatibilizer for polyamides and polyolefins, and **in that** the assembly operation is carried out by welding the two elements together over at least a portion of the surfaces of the latter, and **in that**:
- the two elements are brought into contact over a portion of their surface, or
- the two elements are brought into contact over at least one portion of their surface and the assembly operation is carried out over a portion of the surface where the two elements are in contact.

2. Article according to Claim 1, **characterized in that** the compatibilizer is an ionomer.

3. Article according to Claim 1 or 2, **characterized in that** the welding is carried out by laser welding, vibration welding, ultrasonic welding, hot-plate welding or infrared welding.

4. Article according to any one of Claims 1 to 3, **characterized in that** the material of the second element is a composition comprising a polyamide, an ionomer and a polyolefinic compound.

5. Article according to Claim 4, **characterized in that** the polyolefinic compound is an elastomer or a thermoplastic.

6. Article according to either of Claims 4 and 5, **characterized in that** the polyolefinic compound is a thermoplastic of the same kind as that from which the first element is produced.

7. Article according to one of the preceding claims, **characterized in that** the polyamide is chosen from nylon-6, nylon-11, nylon-12, nylon-4,6, nylon-6,10, nylon-6,6, nylon-6,10, nylon-6,36, copolymers and blends based on these polyamides.

8. Article according to one of the preceding claims, **characterized in that** the composition has a melt flow index of between 0.5 g/10 min and 8 g/10 min, measured under a load of 5 kg at a temperature of 275°C.

9. Article according to one of the preceding claims, **characterized in that** the polyolefin is chosen from polyethylenes, polypropylenes, copolymers and blends based on these polymers.

10. Article according to one of Claims 4 to 9, **characterized in that** the polyolefinic compound is polyethylene.

11. Article according to one of Claims 4 to 9, **characterized in that** the polyolefinic compound is an ethylene-propylene rubber functionalized by maleic anhydride.

12. Article according to one of Claims 4 to 11, **characterized in that** the composition has a continuous phase and a dispersed phase within the continuous phase, the continuous phase consisting of the polyamide and the dispersed phase consisting of the polyolefinic compound.

13. Article according to one of the preceding claims, **characterized in that** the elements are obtained by forming using a technique chosen from injection molding, extrusion blow molding, gas injection molding and water injection molding.

14. Article according to one of the preceding claims, **characterized in that** the two elements are hollow, assembled by the complementarity of the shapes so that the hollow portions of each of the elements communicate with each other.

15. Article according to Claim 14, **characterized in that** the second element is a tubular conduit.

16. Process for manufacturing articles according to one of the preceding claims, by forming elements made of a thermoplastic and then joining them together, **characterized in that** the assembly operation is carried out by bringing the elements into contact with each other over at least a portion of their surfaces and then welding the two parts over at least a portion where the two elements are in contact, at a temperature above the softening point of the materials constituting the elements.

17. Process according to Claim 16, **characterized in that** the welding is carried out by means of a laser, vibration welding, ultrasonic welding, hot-plate welding or infrared welding.
